# FASCICULE DE BREVET EUROPEEN

(11) **EP 2 817 721 B1**
(45) Date de publication et mention de la délivrance du brevet: **13.07.2016**
(21) Numéro de dépôt: 13710484.0
(22) Date de dépôt: 19.02.2013
(51) Int. Cl.: G06F 13/38

(54) **EQUIPEMENT ELECTRONIQUE POUR LA REPLICATION DE PORTS ET LE ROUTAGE DE SIGNAUX NUMERIQUES**
ELEKTRONISCHE AUSRÜSTUNG ZUR REPLIKATION VON PORTS UND ROUTEN VON DIGITALEN SIGNALEN
ELECTRONIC EQUIPMENT FOR THE REPLICATION OF PORTS AND THE ROUTING OF DIGITAL SIGNALS

(30) Priorité: 23.02.2012 FR 1251668
(43) Date de publication de la demande: 31.12.2014
(73) Titulaire: Edevice, 33700 Merignac (FR)
(72) Inventeur: BERREBI, Marc, F-33700 Mérignac (FR)
(74) Mandataire: IP Trust
(86) Numéro de dépôt international: PCT/FR2013/050340
(87) Numéro de publication internationale: WO 2013/124579

(56) Documents cités:
- WO-A1-2011/069122
- WO-A2-2006/108174

## Description

### Domaine de l'invention

La présente invention concerne le domaine de la connectique en environnement sécurisé, notamment pour des applications médicales imposant des contraintes d'asepsie, ou en milieu stérile, ou encore en ambiance explosive.

Elle concerne plus précisément un dispositif de réplication de port permettant de connecter une pluralité d'équipements tels que des sondes, à un équipement de supervision relié au dispositif de concentration par radiofréquence, notamment une tablette informatique, un ordinateur, un smartphone ou un routeur.

### Etat de la technique

Les ordinateurs portables utilisent souvent un accessoire mécaniquement et électriquement connecté pour associer un ensemble standard de périphériques tels qu'un moniteur, un clavier externe, une souris externe ou périphérique de pointage, l'imprimante et autres périphériques câblés. Ces accessoires sont communément connus comme une station d'accueil ou de réplicateur de ports.

Une connexion physique est établie entre l'ordinateur portable et la station d'accueil, au moment où la station d'accueil fournit les ports nécessaires pour se connecter à ces périphériques. Le but principal du réplicateur est de fournir un mécanisme rapide et pratique pour permettre à l'ordinateur portable de s'attacher ou de se détacher de ces périphériques sans avoir à déconnecter physiquement chacun des câbles respectifs de l'ordinateur.

Bien que les solutions disponibles aujourd'hui de réplicateur permettent de fournir un certain niveau de confort en ce qui concerne la connexion / déconnexion rapide, ils soulèvent également des préoccupations concernant les coûts et la fiabilité.

On connaît aussi dans l'état de la technique des boîtiers de raccordement comprenant une série de ports USB, et intégrant des moyens de télétransmission selon un protocole tel que WIFI ou Bluetooth.

On connaît par exemple la demande de brevet américain US 2006061963 décrivant une station d'accueil sans fil comprenant un ordinateur ayant un premier émetteur-récepteur sans fil, et au moins un dispositif périphérique ayant un deuxième émetteur-récepteur sans fil. L'ordinateur et le périphérique dialoguent en établissant une connexion sans fil, l'ordinateur détectant automatiquement la présence du périphérique et le logiciel pilote associé avec le périphérique.

La demande de brevet américain US 2008195788 décrit une station d'accueil sans fil pour permettre une connexion sans fil entre un dispositif de calcul et une pluralité de périphériques, le système d'amarrage sans fil comprenant:
- un émetteur-récepteur sans fil pour communiquer avec le dispositif de calcul sur un support sans fil;
- un interrupteur couplé à l'émetteur-récepteur sans fil et à une pluralité d'entrées / sorties (I / O) des contrôleurs et
- une pluralité de contrôleurs I / O pour communiquer avec un ou plusieurs de la pluralité des périphériques.

La connexion entre un périphérique et le contrôleur d'E / S est établie par exemple par une connexion USB, une connexion parallèle, une connexion série RS232, une connexion de souris PS/2-style, une connexion de clavier, un port SATA (serial Advanced Technology Attachment), un port VGA (video Graphics Array), un port DVI (interface visuelle numérique), ou un port HDMI (interface multimédia haute définition).

La demande de brevet américain US 2010057969 décrit un autre exemple d'une station d'accueil sans-fil permettant une connexion entre un dispositif de calcul et une pluralité de périphériques. La station d'accueil sans fil modulaire comprend au moins un émetteur-récepteur sans fil et au moins une antenne pour communiquer avec le dispositif de calcul sur un support sans fil, et une pluralité d'interface pour communiquer avec un ou plusieurs de la pluralité des périphériques.

La demande de brevet américain US2009049307 décrit un réplicateur de ports USB, appareil comportant un processeur assurant le traitement et la conversion des données, ainsi qu'un module de communication Wi-Fi. Les ports USB permettent de connecter des dispositifs électroniques USB, comme une clé USB ou une imprimante.

Lorsque le dispositif électronique se connecte au port USB, le processeur reçoit un signal de données de connexion par le port USB et convertit le signal de connexion de données format en Wi-Fi selon le protocole de communication format, puis transmet les données du signal de connexion via le serveur sans fil de communication Wi-Fi à un ordinateur personnel ou une tablette numérique. L'utilisateur peut utiliser à distance le dispositif électronique relié à l'appareil à distance sans fil via le réplicateur de port USB.

Le brevet américain US7024501 décrit un dispositif comprenant:
- une interface de communication sans fil ayant un premier canal de communication sans fil configuré pour recevoir des signaux de commande sans fil à partir d'un premier dispositif d'interface sans fil et un second canal de communication sans fil configuré pour recevoir des signaux de commande sans fil à partir d'une seconde interface sans fil;
- une interface de contrôle ayant un port de communication configuré pour transmettre les signaux de contrôle sans fil reçus à la fois depuis la première interface sans fil et depuis la seconde interface.

Le port de communication est un port USB (Universal Serial Bus) configurable pour transmettre des signaux de commande reçus d'une pluralité d'interfaces;

L'interface de commande comprend un moyen de réinitialisation de bus qui permet au second canal de communication sans fil de répondre au trafic dirigé vers un port de communication différent.

Selon une autre variante, l'interface radiofréquence est constituée d'une ou plusieurs interfaces mettant en oeuvre un protocole de transmission à faible rayon d'action. Ce protocole est par exemple le protocole de haut niveau développé par la ZigBee Alliance permettant la communication courte distance, à consommation réduite, basée sur la norme IEEE 802.15.4 pour les réseaux à dimension personnelle.

Avantageusement, l'équipement électronique selon l'invention assure de façon automatique la conversion d'un profil propriétaire ou standard utilisé par un périphérique filaire vers un profil standard utilisé par un périphérique RF virtuel associé au périphérique filaire.

Selon une variante, l'équipement masque les phases de déconnexion d'un périphérique filaire en maintenant un périphérique virtuel sur une interface RF.

Selon une autre variante, l'équipement selon l'invention assure de façon automatique la conversion de plusieurs profils propriétaires ou standards utilisés par plusieurs périphériques filaires vers un profil propriétaire ou standard utilisé par un unique périphérique RF virtuel associé à plusieurs périphériques filaires.

### Inconvénients de l'art antérieur

Les solutions de l'art antérieur ne sont pas compatibles avec une utilisation dans des environnements sensibles, par exemple en milieu hospitalier ou dans le cas de télémédecine ou encore en ambiance explosive, impliquant des normes sévères en matière de protection électrique.

La norme NF EN 60 601-1 détermine par exemple les règles générales de la sécurité électrique des équipements médicaux. Elle définit les courants de fuite et courants auxiliaires patient à mesurer. Les valeurs limites de ces courants sont fixées selon la classification des appareils.

Bon nombre d'entre eux font l'objet de normes spécifiques qui modifient ou complètent la norme générale. L'étude combinée de ces normes permet de développer des procédures de contrôle de sécurité électrique. Celles-ci regroupent l'identification de l'équipement, la liste du matériel nécessaire, le schéma du montage et les résultats.

Toutefois, lorsque des équipements tels qu'une sonde d'analyse de l'oxymétrie ou des capteurs ECG (électrocardiogramme) sont connectés sur un réplicateur de ports de l'état de la technique, le respect des normes n'est plus respecté. En effet, la multiplicité des ports peut conduire à raccorder sur le réplicateur, outre des équipements conformes à la norme électrique, d'autres équipements non conformes. Il peut s'agir par exemple d'un équipement audiovisuel branché par mégarde sur le réplicateur de ports, ou d'un équipement quelconque qu'un utilisateur branche sur le réplicateur pour bénéficier de l'accès à un ordinateur ou une tablette distante, en profitant de l'universalité de ces ports.

Les ports des réplicateurs de l'état de la technique n'évitent pas une propagation des courants de fuite d'un équipement défectueux vers les autres ports et donc vers les équipements médicalisés, risquant alors de provoquer de graves perturbations voire des risques pour le patient. Il en est de même pour des réplicateurs utilisés en ambiances explosives.

### Solution apportée par l'invention

Afin de remédier à ces inconvénients, l'invention concerne selon son acception la plus générale un équipement électronique pour la réplication de ports et le routage de signaux numériques destiné à des environnements sécurisés pour la concentration de signaux provenant d'une pluralité d'équipements de mesure d'une part, et la communication avec un équipement de supervision d'autre part, caractérisé en ce qu'il comporte
- N ports dont M ports sont isolés électriquement par coupleur optoélectronique, N étant un entier supérieur ou égal à 1, et M étant un entier compris entre N-1 et N,
- une interface radiofréquence avec un équipement de supervision apparié
- un calculateur réalisant une conversion de protocole entre le protocole radio-fréquence d'une part et le protocole d'interface d'autre part.

De préférence, N est supérieur à 3.

Le dispositif selon l'invention permet de respecter les exigences pour les systèmes de données utilisés par les instruments médicaux (Médical Device Data Systems, MDDS) prévus notamment par l'administration américaine (Food and Drug Administration - FDA) pour bénéficier d'une procédure simplifiée d'accès au marché pour les équipements répondant aux exigences requises en termes de sécurité et de performance.

### Description détaillée d'un exemple non limitatif de réalisation

L'invention sera mieux comprise à la lecture de la description qui suit, concernant un exemple non limitatif de réalisation illustré par les dessins annexés où :
- La figure 1 représente une vue schématique d'un dispositif selon l'invention
- La figure 2 représente le schéma de principe du dispositif selon l'invention
- La figure 3 représente une vue schématique de l'utilisation d'un dispositif selon l'invention.

L'équipement selon l'invention est constitué par un boîtier autonome (1) disposant d'un ou plusieurs connecteurs USB (2), d'un ou plusieurs connecteurs série (3), d'une ou plusieurs antennes (5) pour diffusion d'un signal radio courte portée de type Bluetooth ou WiFi, de LEDs (4) indiquant l'état de connexion et d'un processeur interne en charge de la gestion des interfaces de communication précitées.

L'équipement est un boitier autonome dont le bon fonctionnement nécessite uniquement une source d'alimentation interne (batterie) ou externe (bloc secteur).

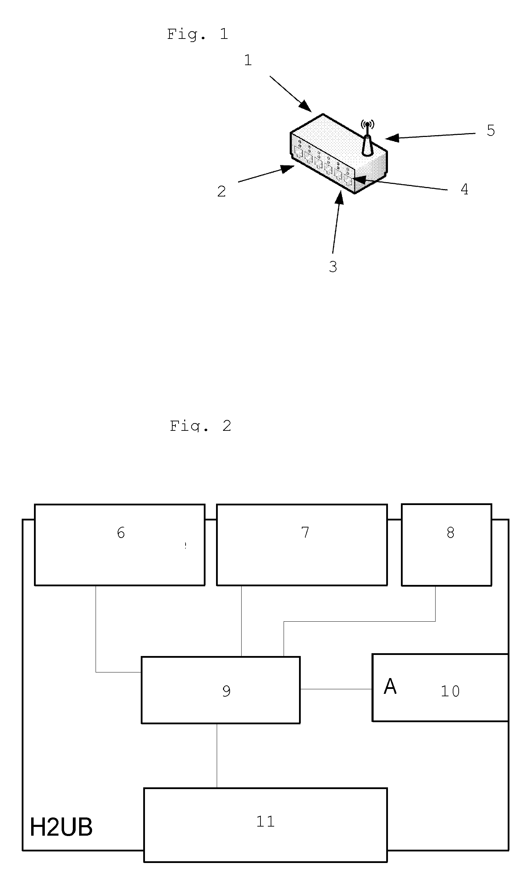

La figure 2 représente le schéma de principe du dispositif. Il comporte un circuit électronique comportant des interfaces série (6), des interfaces USB (7) et le circuit de contrôle des indicateurs à LED (8).

Un calculateur (9) réalise les traitements de gestion des protocoles mis en oeuvre et la conversion des signaux pour construire à partir des signaux d'entrée sortie venant des interfaces série (6) et USB (7) un signal selon un protocole d'échange de type WIFI ou Bluetooth délivré à une interface radiofréquence (11).

Une alimentation sécurisée conforme aux normes électriques médicales (10) assure l'alimentation des différents circuits.

Chaque interface série (6) et USB (7) est isolée par un circuit d'isolation électrique, par exemple un coupleur assurant une isolation galvanique tel qu'un optocoupleur.

Lors des phases de connexion du périphérique, le dispositif procède éventuellement à sa mise sous tension si l'interface électrique du périphérique le demande puis le calculateur se comporte ensuite comme un host traditionnel qui va gérer le périphérique en échangeant les messages prévus par le protocole. Le calculateur va notamment identifier le numéro de série de l'équipement ainsi que le type de profil utilisé pour pouvoir procéder à l'émulation d'un périphérique virtuel RF destiné à être piloté par l'équipement de supervision.

Si le périphérique se déconnecte ou est mis hors tension, le dispositif pourra éventuellement ne pas le signaler à l'équipement de supervision et continuer à émuler le périphérique de façon inerte afin de ne pas déclencher des phases de connexion/déconnexion à répétition sur l'équipement de supervision. Ce masquage de déconnexion sera alors effectif jusqu'à la reconnexion du même périphérique ou d'un périphérique équivalent suivant la configuration du dispositif. Si une requête est soumise au périphérique virtuel par l'équipement de supervision et nécessite le dialogue avec le périphérique déconnecté ou hors tension, le masquage prend alors fin en signifiant la déconnexion du périphérique.

Au niveau du protocole le calculateur va notamment extraire les informations contenues dans des profils normalisés et utilisés par exemple par les fournisseurs de périphériques USB tels que les profils PHDC (Personal Healthcare Device Class), Serial port ou Audio. Le processeur va ensuite déterminer quel type de profil est le mieux adapté pour retranscrire ces informations issues d'un ou plusieurs périphériques filaires vers l'équipement de supervision au travers de l'interface RF en réalisant une émulation de périphérique RF. Le processeur effectuera ainsi automatiquement le transfert de données contenues dans un profil PHDC vers un profil HDP (Health Device Profile) sur périphérique émulé en Bluetooth ou vers un profil ZHC (ZigBee Healthcare) sur périphérique émulé en ZigBee. L'émulation de périphériques utilisant des protocoles standard permettra en outre d'éviter toute installation de logiciel spécifique sur l'équipement de supervision. Ainsi un périphérique USB ou série nécessitant un logiciel/driver propriétaire pourra être exploité depuis l'équipement de supervision sans que celui-ci nécessite la présence d'un logiciel spécifique préalablement installé étant entendu que les fonctions du dit logiciel spécifique sont réalisées par le calculateur du dispositif.

Lorsque plusieurs périphériques sont redirigés vers un même protocole applicatif RF, le calculateur pourra également réaliser un multiplexage applicatif en regroupant l'ensemble des données issues des périphériques USB ou série vers un seul et même périphérique virtuel émulé en RF qui inclura plusieurs catégories ou types de service reprenant chacun les données issues des périphériques USB ou série. Ce « méta » périphérique virtuel émulé pourra être accessible depuis l'équipement de supervision au travers de logiciels standards mais pourra également nécessiter l'installation d'un logiciel/application/driver spécifique qui garantira la bonne récupération des données. L'installation du dit logiciel pourra être réalisée au travers d'une liaison Internet disponible sur l'équipement de supervision ou directement via l'interface RF entre le dispositif et l'équipement de supervision.

### Variantes de réalisation

Eventuellement, un port unique peut être non isolé, le dispositif étant alors muni d'une alimentation (10) isolée selon les normes susvisées.

En résumé, on peut réaliser différentes configurations :
- un ou plusieurs ports tous isolés, une alimentation quelconque
- un port non isolé et éventuellement plusieurs ports isolés, et une alimentation isolée.

Le processeur (9) et le circuit d'interface radio (11) assurent la conversion des signaux vers le protocole de télétransmission. Wifi, et ou Bluetooth et ou GSM.

Dans le cas d'une télétransmission WIFI, la conversion est conforme à la norme 802.11.

La couche physique propose trois types de codage de l'information, et réalise le traitement des signaux provenant ou destinés aux interfaces (6, 7) pour les coder selon les spécifications de la norme 802.11.

La couche liaison de données, constituée de deux sous-couches :
- le contrôle de la liaison logique (Logical Link Control, ou LLC) ;
- le contrôle d'accès au support (Media Access Control, ou MAC).

L'interface RF (11) définit la modulation des ondes radioélectriques et les caractéristiques de la signalisation pour la transmission de données, tandis que le processeur (9) assure la liaison de données et définit l'interface entre le bus de la machine et la couche physique, selon une méthode d'accès proche de celle utilisée dans le standard Ethernet et les règles de communication entre les différentes stations.

### Mode opératoire

Afin de connecter les différents équipements USB ou série, l'utilisateur les connecte sur le boitier (1) qui va les répliquer sur l'interface sans-fil locale Bluetooth ou WiFi. L'utilisateur peut alors consulter son terminal graphique pour accéder directement aux équipements connectés au dispositif.

Suite à la connexion d'un nouvel équipement filaire, le dispositif détecte cet équipement électriquement et dialogue avec celui-ci en se comportant comme le pilote principal de l'équipement. Le processeur (9) simule ensuite la présence d'un nouvel équipement sans-fil virtuel afin qu'il soit détecté par le terminal graphique à proximité.

Pendant la phase d'installation de l'équipement sans-fil virtuel nouvellement détecté, le processeur (9) répond à l'ensemble des requêtes émises.

En fonctionnement nominal, le processeur (9) assure le transfert et le formatage des informations issues de l'équipement filaire depuis/vers la tablette ou l'ordinateur distant dans le respect des protocoles sans-fil sélectionnés.

Lorsque l'équipement filaire est déconnecté par l'utilisateur, le processeur (9) en informe la tablette ou l'ordinateur conformément au protocole utilisé.

Le dispositif décrit concerne notamment le domaine de la santé à domicile en rendant possible l'utilisation d'équipements médicaux existants disposant d'une connectivité filaire (USB/série) depuis un terminal graphique (tablette/ordinateur portable ou smartphone) sans nécessiter de branchements sur cette dernière.

Au-delà de ce secteur d'activité, l'utilisation du dispositif semble intéressante dès qu'un équipement filaire est censé communiquer avec un terminal graphique intégrant une liaison sans-fil locale (Bluetooth, WiFi,...) notamment pour répondre aux problématiques suivantes :
- absence de connecteurs sur l'ordinateur ou la tablette;
- risque d'usure des connecteurs de l'ordinateur ou la tablette en cas de forte répétition des connexions/déconnexion ;
- mise en relation immédiate des équipements avec l'ordinateur ou la tablette dès que celui-ci est à portée radio du dispositif ;
- extension de la distance entre les équipements et l'ordinateur ou la tablette jusqu'à la portée maximale de la liaison radio utilisée avec le dispositif ;
- pilotage de plusieurs équipements simultanément ;
- respect de distances de sécurité ou d'isolation.

Le dispositif peut ainsi être utile pour des applications diverses et variées dans le secteur industriel, commercial ou grand public comme par exemple :
- automobile : connexion de clés USB qui communiquent avec un téléphone cellulaire ;
- point de vente : connexion de lecteur de carte de fidélité USB, d'imprimante USB et de lecteur code-barre USB avec une tablette utilisée par l'hôtesse de caisse ;
- grand public : connexion d'un appareil photo numérique via USB et d'une imprimante USB sur le dispositif pour transfert et impression d'images après visualisation sur une tablette.

Le dispositif peut être enrichi de fonctionnalités additionnelles qui permettront de faciliter sa prise en main ou d'étendre les capacités du terminal graphique connecté :
- Ecran LCD avec bouton pour proposer une interface utilisateur plus riche ;
- Intégration d'un moyen de connexion vers Internet (Ethernet, WiFi, 3G, 4G, RTC) qui est notamment mis à disposition de l'équipement de supervision au travers de la liaison RF pour permettre la connexion du dit équipement sur Internet ;
- Interface de carte mémoire ou de carte à puces.

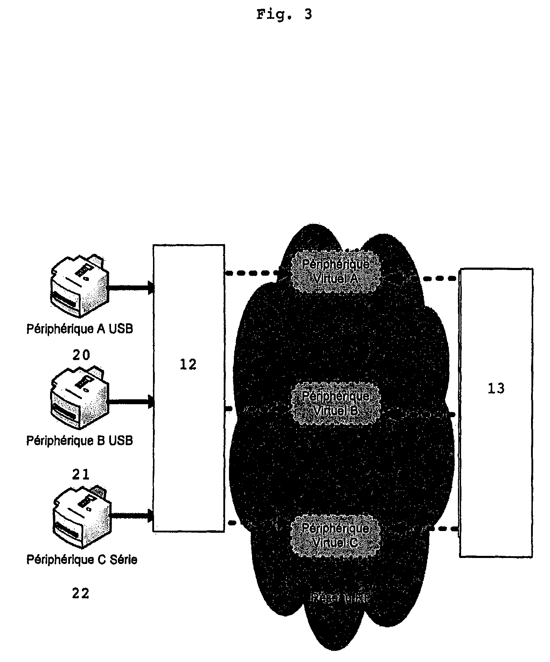

La figure 3 représente une vue schématique du contexte d'utilisation du dispositif (12), qui permet de virtualiser des périphériques (20, 21, 22) raccordés par un port USB pour permettre une supervision par un équipement (13) communicant par un réseau radiofréquence sans fil.

## Revendications

1. Equipement électronique pour la réplication de ports et le routage de signaux numériques, destiné à des environnements sécurisés pour la concentration de signaux provenant d'une pluralité d'équipements de mesure d'une part, et la communication avec un équipement de supervision d'autre part, **caractérisé en ce qu'**il comporte
- N ports dont M ports (2) sont isolés électriquement par coupleur optoélectronique, N étant un entier supérieur ou égal à 1, et M étant un entier compris entre N-1 et N,
- une interface radiofréquence (11) avec un équipement de supervision apparié
- un processeur (9) réalisant une conversion de protocole entre le protocole radio-fréquence d'une part et le protocole des ports d'autre part,
et **en ce que** l'interface radiofréquence (11) est constitué d'une ou plusieurs interfaces mettant en oeuvre un protocole de transmission à faible rayon d'action,
et **en ce qu'**il comporte des moyens de conversion automatique d'un profil propriétaire ou standard utilisé par un périphérique filaire vers un profil standard utilisé par un périphérique RF virtuel associé au périphérique filaire,
et **en ce qu'**il comporte des moyens de masquage des phases de déconnexion d'un périphérique filaire en maintenant un périphérique virtuel sur une interface RF.

2. Equipement électronique selon la revendication 1 **caractérisé en ce que** N est supérieur à 3 et M égal à N-1.

3. Equipement électronique selon la revendication 1 ou 2 **caractérisé en ce qu'**une partie au moins des ports sont des ports USB.

4. Equipement électronique selon la revendication 1 ou 2 **caractérisé en ce qu'**une partie au moins des ports sont des ports série.

5. Equipement électronique selon la revendication 1 ou 2 **caractérisé en ce que** l'interface radiofréquence (11) est une interface WIFI.

6. Equipement électronique selon la revendication 1 ou 2 **caractérisé en ce que** l'interface radiofréquence (11) est constitué d'une ou plusieurs interfaces bluetooth.

7. Equipement électronique selon la revendication 1 **caractérisé en ce qu'**il comporte des moyens de conversion automatique de plusieurs profils propriétaires ou standards utilisés par plusieurs périphériques filaires vers un profil propriétaire ou standard utilisé par un unique périphérique RF virtuel associé à plusieurs périphériques filaires.

## Patentansprüche

1. Elektronisches Gerät für die Port-Replizierung und die Weglenkung digitaler Signale, das zum einen für gesicherte Umgebungen zur Sammlung von Signalen, die aus einer Vielzahl von Messgeräten stammen, und zum anderen zur Kommunikation mit einem Überwachungsgerät bestimmt ist, **dadurch gekennzeichnet, dass** es folgendes umfasst:
- N Ports, von denen M Ports (2) durch einen Optokoppler elektrisch isoliert sind, wobei N eine ganze Zahl größer / gleich 1, und M eine ganze Zahl zwischen N-1 und N ist,
- eine Radiofrequenzschnittstelle (11) mit einem gepaarten Überwachungsgerät,
- einen Prozessor (9), der eine Protokollumwandlung zwischen dem Radiofrequenzprotokoll zum einen und dem Port-Protokoll zum anderen durchführt,
und dadurch, dass die Radiofrequenzschnittstelle (11) aus einer oder mehreren Schnittstellen besteht, bei denen ein Übertragungsprotokoll mit geringer Reichweite eingesetzt wird,
und dadurch, dass es Mittel zur automatischen Umwandlung eines von einem drahtgebundenen Peripheriegerät benutzten Eigentümer- oder Standardprofils in ein von einem virtuellen RF-Peripheriegerät in Verbindung mit dem drahtgebundenen Peripheriegerät benutztes Standardprofil umfasst,
und dadurch, dass es Mittel zur Maskierung der Abschaltphasen eines drahtgebundenen Peripheriegeräts bei gleichzeitiger Beibehaltung eines virtuellen Peripheriegeräts auf einer RF-Schnittstelle umfasst.

2. Elektronisches Gerät nach Anspruch 1, **dadurch gekennzeichnet, dass** N größer ist als 3 und M gleich N-1 ist.

3. Elektronisches Gerät nach Anspruch 1 oder 2, **dadurch gekennzeichnet, dass** mindestens ein Teil der Ports USB-Ports sind.

4. Elektronisches Gerät nach Anspruch 1 oder 2, **dadurch gekennzeichnet, dass** zumindest ein Teil der Ports serielle Ports sind.

5. Elektronisches Gerät nach Anspruch 1 oder 2, **dadurch gekennzeichnet, dass** die Radiofrequenzschnittstelle (11) eine WIPI-Schnittstelle ist.

6. Elektronisches Gerät nach Anspruch 1 oder 2, **dadurch gekennzeichnet, dass** die Radiofrequenzschnittstelle (11) aus einer oder mehreren Bluetooth-Schnittstellen besteht.

7. Elektronisches Gerät nach Anspruch 1, **dadurch gekennzeichnet, dass** es Mittel zur automatischen Umwandlung mehrerer, von mehreren drahtgebundenen Periphiegeräten benutzten Eigentümer- oder Standardprofilen in ein, von einem einzigen virtuellen RF-Peripheriegerät in Verbindung mit mehreren drahtgebundenen Peripheriegeräten benutztes Eigentümer- oder Standardprofil aufweist.

## Claims

1. Electronic equipment for the replication of ports and the routing of digital signals, intended for secure environments for concentrating signals from a plurality of pieces of measuring equipment on the one hand, as well as the communication with supervising equipment on the other hand, **characterized in that** it comprises
- N ports whereof M ports (2) are electrically insulated by an opto-electronic coupler, with N being an integer greater than or equal to 1, and M being an integer between N-1 and N,
- a radio frequency interface (11) with matched supervising equipment,
- a processor (9) performing a protocol conversion between the radio frequency protocol on the one hand and the protocol of the ports, on the other hand,
and **in that** the radio frequency interface (11) comprises one or more interface(s) implementing a transmission protocol with a small radius of action,
and **in that** it comprises means for automatically converting a proprietary or standard profile used by a wired peripheral device to a standard profile used by a virtual RF profile associated with the wired peripheral device,
and **in that** it comprises means for masking disconnection phases of a wired peripheral device while maintaining a virtual peripheral device on a RF interface.

2. Electronic equipment according to claim 1, **characterized in that** N is greater than 3, and M is equal to N-1.

3. Electronic equipment according to claim 1 or 2, **characterized in that** at least a part of the ports are USB ports.

4. Electronic equipment according to claim 1 or 2, **characterized in that** at least a part of the ports are serial ports.

5. Electronic equipment according to claim 1 or 2, **characterized in that** the radio frequency interface (11) is a WIFI interface.

6. Electronic equipment according to claim 1 or 2, **characterized in that** the radio frequency interface (11) comprises one or more Bluetooth interface(s).

7. Electronic equipment according to claim 1, **characterized in that** it comprises means for automatically converting several proprietary or standard profiles used by several wired peripheral devices to a proprietary or standard profile used by a single virtual RF peripheral device associated with several wired peripheral devices.
